# EUROPEAN PATENT SPECIFICATION

(11) **EP 2 159 669 B1**
(45) Date of publication and mention of the grant of the patent: **23.08.2017**
(21) Application number: 08021295.4
(22) Date of filing: 08.12.2008
(51) Int. Cl.: G06F 3/033, G06F 3/044

(54) **Electromagnetic stylus for operating a capacitive touch panel**
Elektromagnetischer Stift zur Bedienung eines kapazitativen Berührungsbildschirms
Stylet électromagnétique pour faire fonctionner un panneau tactile capacitif

(30) Priority: 01.09.2008 TW 97133438
(43) Date of publication of application: 03.03.2010
(73) Proprietor: eTurboTouch Technology Inc., Taoyuan County 32063 (TW); Wistron Corporation, New Taipei City 221 (TW)
(72) Inventor: Wu, Cheng-Ko, Jhongli City Taoyuan County (TW); Wu, Ming-Tsung, Jhongli City Taoyuan County (TW)
(74) Representative: Becker Kurig Straus

(56) References cited:
- US-A1- 2004 105 040
- US-A1- 2008 150 658
- US-A1- 2008 150 918

## Description

The present invention relates to an electromagnetic stylus according to the pre-characterising clause of claim 1.

There are three typical types of prior art touch panels. The first is a resistive type. A coordinate of a resistive type touch panel is determined by pressing on the area of the touch panel to enable the contact of two electrodes. The second is a capacitive type. After a stylus triggers an area of a capacitive type touch panel, a leakage of current will flow from the contact area to fingers holding the stylus through the tip and conductors of the stylus, thus a coordinate corresponding to the area of the capacitive type touch panel can be determined. If the fingers holding the stylus are wearing a glove or other insulation materials, then the triggered coordinate of the capacitive type touch panel cannot be determined because no leakage current can pass through the fingers to ground. The third type utilizes an electromagnetic stylus with a digitizer. The electromagnetic stylus emits signals to the digitizer or the digitizer senses the electromagnetic stylus to detect a triggered coordinate of the digitizer. However, the electromagnetic stylus has to be used with the digitizer.

U.S. Patent Application Publication No. 2008/150918 A1 discloses an electromagnetic stylus for use with an antenna arrangement including multiple coil resonant circuits to provide power to the stylus and define separate channels for communicatively coupling with the stylus tip. U.S. Patent Application Publication No. 2004/105040 A1 discloses a touch panel integrating both capacitive-type and EM-type touch panels. Both of these references still require the use of specialized touch panel to use the electromagnetic stylus.

This in mind, the present invention aims at providing an electromagnetic stylus which emits wireless signals with a frequency similar to that of the capacitive touch panel to interfere with the electric (electromagnetic) field of the capacitive touch panel. Thus even if a user wears a glove or another insulation material, the capacitive touch panel can still determine the triggered coordinate of the capacitive touch panel according to the change of the electric (electromagnetic) field of the capacitive touch panel.

This is achieved by a stylus for controlling a capacitive touch panel according to claim 1. The dependent claims pertain to corresponding further developments and improvements.

As will be seen more clearly from the detailed description following below, the claimed electromagnetic stylus comprises a housing, a signal transducer for accessing a frequency signal of the capacitive touch
panel, a transceiving winding encircling the signal transducer for receiving and transmitting wireless signals having a frequency similar to a frequency of the capacitive touch panel, a controller or synchronizing winding for generating a frequency signal having a frequency similar to the frequency of the capacitive touch panel according to the wireless signals received by the transceiving winding, and a circuit board installed inside the housing and connected to the signal transducer for processing the frequency signal generated by the controller or synchronizing winding.

In the following, the invention is further illustrated by way of example, taking reference to the accompanying drawings. Thereof
FIG.1 is a perspective view of a prior art capacitive touch panel,
FIG.2 is a top view of the capacitive touch panel in FIG.1,
FIG.3 is a perspective view of an electromagnetic stylus according to the first embodiment of the present invention,
FIG.4 is a perspective view of an electromagnetic stylus according to the second embodiment of the present invention, and
FIG.5 is a perspective view of an electromagnetic stylus according to the third embodiment of the present invention.

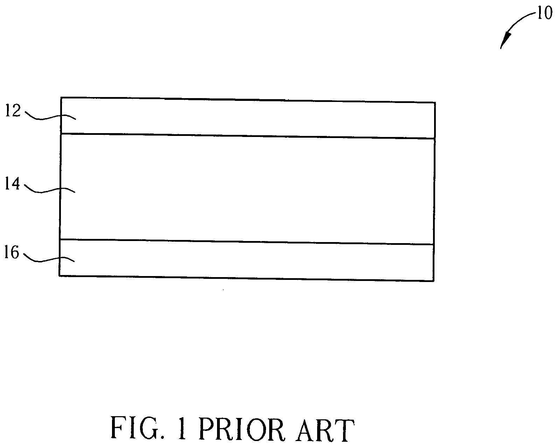

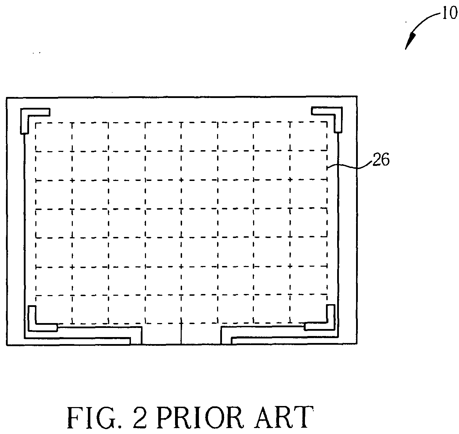

Please refer to FIGS.1 and 2. FIG.1 is a perspective view of a prior art capacitive touch panel 10. FIG.2 is a top view of the capacitive touch panel 10. The capacitive touch panel 10 comprises a first conductive layer 12, an insulation layer 14 and an anti-electronic jamming layer 16. When voltage is imposed on the first conductive layer 12, the surface of the conductive layer will generate a uniform electric (electromagnetic) field 26. The anti-electronic jamming layer 16 can prevent the interference of external electronic signals. When a capacitive stylus touches the capacitive touch panel 10, a current will leak from the stylus to a human body, and instantaneously change the electric (electromagnetic) field 26 so that the leakage current of the capacitive touch panel 10 is changed. Then the capacitive touch panel 10 can determine the coordinate of the triggered position of the touch panel 10 according to the variation of the leakage current.

However in many laboratories, experimental staffs may wear gloves or other insulated clothing to prevent accidents. In this case, if an experimental staff uses a capacitive stylus to trigger the capacitive touch panel 10, then the leakage current cannot flow towards the human body through the stylus. Thus the electric (electromagnetic) field would not be changed, and the capacitive touch panel 10 cannot determine the triggered coordinate of the capacitive touch panel 10 according to the change of the electric (electromagnetic) field.

In order to solve the problem of being unable to determine the triggered coordinate of the capacitive touch panel 10 when a user wears an insulation material, the present invention provides an electromagnetic stylus so that the user can use the electromagnetic stylus to control the capacitive touch panel 10 regardless of whether the user wears an insulation material or not.

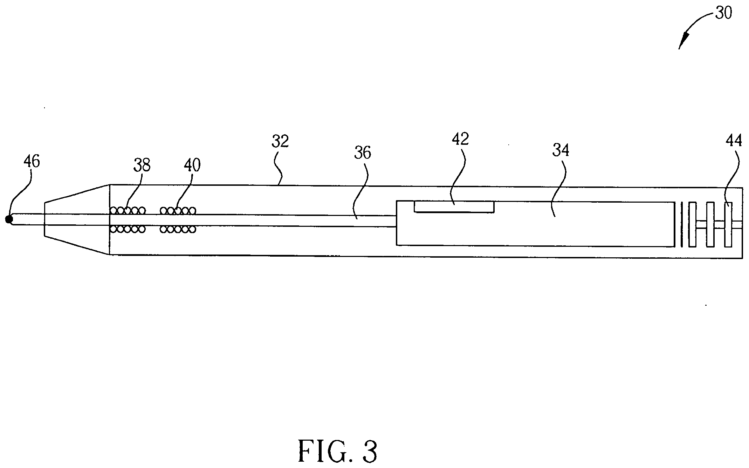

Please refer to FIG.3. FIG.3 is a perspective view of an electromagnetic stylus 30 according to the first embodiment of the present invention. The electromagnetic stylus 30 comprises a housing 32, a signal transducer 36 for accessing a frequency signal of the capacitive touch panel 10, a transceiving winding 38 encircling the signal transducer 36 for detecting the frequency of the capacitive touch panel 10 and transmitting wireless signals having a frequency similar to the frequency of the capacitive touch panel 10, a synchronizing winding 40 encircling the signal transducer 36 for generating a frequency signal having a frequency similar to the frequency of the capacitive touch panel 10 through oscillation, an oscillator 42 for amplifying the frequency signal generated by the synchronizing winding 40, a circuit board 34 installed inside the housing 32 and connected to the signal transducer 36 for processing the frequency signal amplified by the oscillator 42, and a battery 44 installed inside the housing 32 for providing power to the electromagnetic stylus 30. The oscillator 42 can be installed on the circuit board 34. And the oscillator 42 can be implemented by active elements, passive elements, or a combination of active elements and passive elements.

When a user moves the electromagnetic stylus 30 to a position above the capacitive touch panel 10, the transceiving winding 38 will detect the frequency of the electric (electromagnetic) field of the capacitive touch panel 10. The synchronizing winding 40 will generate a signal having a frequency similar to the frequency of the signal flowing from the capacitive touch panel 10 to the signal transducer 36 through oscillation. The oscillator 42 will amplify the frequency signal generated by the synchronizing winding 40. The circuit board 34 will process the signal amplified by the oscillator 42. And the transceiving winding 38 will transmit wireless signals having a frequency similar to that of the capacitive touch panel 10 to interfere with the electric (electromagnetic) field of the capacitive touch panel 10.

When the capacitive touch panel 10 receives the wireless signals transmitted by the transceiving winding 38, regardless of whether the phase of the wireless signals transmitted by the transceiving winding 38 is the same as the phase of the capacitive touch panel 10 or not, the electric (electromagnetic) field at the surface of the capacitive touch panel 10 is interfered. Thus the triggered coordinate of the capacitive touch panel 10 can be determined according to the change of the electric (electromagnetic) field.

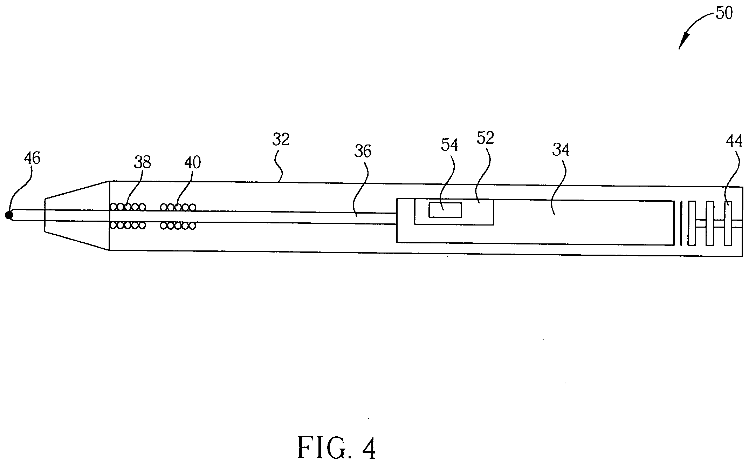

Please refer to FIG.4. FIG.4 is a perspective view of an electromagnetic stylus 50 according to the second embodiment of the present invention. The difference between the electromagnetic stylus 50 and the electromagnetic stylus 30 is that the oscillator 42 in FIG.3 is replaced with a controller 52 in FIG.4. The controller 52 uses firmware or software to amplify the frequency signal generated by the synchronizing winding 40. The controller 52 may comprise an amplifier 54 to further amplify the frequency signal to ensure that the circuit board 34 can process the frequency signal amplified by the controller 52.

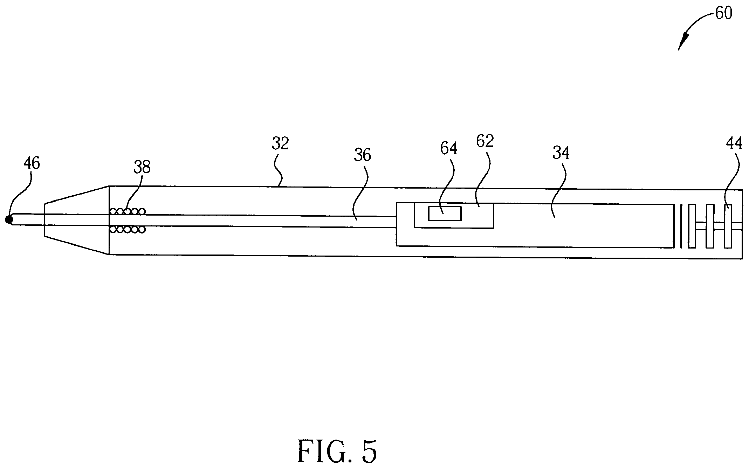

Please refer to FIG.5. FIG.5 is a perspective view of an electromagnetic stylus 60 according to the third embodiment of the present invention. The difference between the electromagnetic stylus 60 and the electromagnetic stylus 50 is that the electromagnetic stylus 60 does not have a synchronizing winding 40. After the electromagnetic stylus 60 is reset, when the electromagnetic stylus 60 contacts the capacitive touch panel 10 for the first time, the controller 62 uses either firmware or software to sample the wireless signals received by the transceiving winding 38, and generate a frequency signal with a frequency similar to that of the capacitive touch panel 10 according to the sampled data. The controller 62 can comprise an amplifier 64 to amplify the frequency signal to ensure that the circuit board 34 can process the frequency signal amplified by the controller 62. After the controller 62 generates the frequency signal, the electromagnetic stylus 60 can operate according to the frequency signal generated by the controller 62. The controller 62 does not need to generate another frequency signal so long as the electromagnetic stylus 60 is not reset. The electromagnetic stylus 60 is reset when the electromagnetic stylus 60 does not trigger the capacitive touch panel 10 for a certain period of time (such as 5 seconds or another length of time).

Compared to the prior art capacitive stylus, the electromagnetic stylus 30, 50, 60 emits wireless signals with a frequency similar to that of the capacitive touch panel 10 to interfere with the electric (electromagnetic) field of the capacitive touch panel 10. Thus even if a user wears a glove or another insulation material, the capacitive touch panel 10 can still determine the triggered coordinate of the capacitive touch panel 10 according to the change of the electric (electromagnetic) field of the capacitive touch panel 10.

## Claims

1. An electromagnetic stylus (30, 50, 60) for controlling a capacitive touch panel (10) comprising:
a housing (32);
**characterized by**:
a signal transducer (36) for accessing a frequency signal of the capacitive touch panel (10);
a transceiving winding (38) encircling the signal transducer (36) for receiving and transmitting wireless signals having a frequency similar to a frequency of the capacitive touch panel (10);
a controller (62) or synchronizing winding (40) for generating a frequency signal having a frequency similar to the frequency of the capacitive touch panel (10) according to the wireless signals received by the transceiving winding (38); and
a circuit board (34) installed inside the housing (32) and connected to the signal transducer (36) for processing the frequency signal generated by the controller (62) or synchronizing winding (40).

2. The electromagnetic stylus (30, 50) of claim 1 **characterized in that** the synchronizing winding (40) encircles the signal transducer (36).

3. The electromagnetic stylus (50, 60) of claim 1 **characterized in that** the controller (62) is installed on the circuit board (34).

4. The electromagnetic stylus (30) of claim 1 **characterized in that** the electromagnetic stylus (30) further comprises an oscillator (42) for amplifying the frequency signal generated by the synchronizing winding (40).

5. The electromagnetic stylus (30) of claim 4 **characterized in that** the oscillator (42) is installed on the circuit board (34).

6. The electromagnetic stylus (50, 60) of claim 1 **characterized in that** the controller (52, 62) comprises an amplifier (54, 64) for amplifying the frequency signal generated by the controller (62) or synchronizing winding (40).

7. The electromagnetic stylus (50, 60) of claim 1 **characterized in that** the controller (52, 62) can amplify the frequency signal generated by the controller (62) or synchronizing winding (40).

8. The electromagnetic stylus (30, 50, 60) of claim 1 **characterized in that** the electromagnetic stylus (30, 50, 60) further comprises a battery (44) installed inside the housing (32) for providing power to the electromagnetic stylus (30, 50, 60).

## Patentansprüche

1. Elektromagnetischer Eingabestift (30, 50, 60) zum Steuern eines kapazitiven Touchpanels (10) welcher umfasst:
ein Gehäuse (32);
**gekennzeichnet durch**:
einen Signalwandler (36) zum Zugreifen auf ein Frequenzsignal des kapazitiven Touchpanels (10);
eine Übermittlungsspule (38), die den Signalwandler (36) umgibt, zum Empfang und zur Übertragung von Drahtlos-Signalen mit einer Frequenz vergleichbar zu der Frequenz des kapazitiven Touchpanels (10);
einen Kontroller (62) oder eine Synchronisierungsspule (40) zur Erzeugung eines Frequenzsignals mit einer Frequenz vergleichbar zu der Frequenz des kapazitiven Touchpanels (10) gemäß der von der Übermittlungsspule (38) empfangenen Drahtlossignale; und
eine (34) in dem Gehäuse (32) installierte Schaltplatine, die mit dem Signalwandler (36) verbunden ist, um das von dem Kontroller (62) oder der Synchronisierungsspule (40) erzeugte Frequenzsignal zu verarbeiten.

2. Elektromagnetischer Eingabestift (30, 50) nach Anspruch 1, **dadurch gekennzeichnet dass** die Synchronisierungsspule (40) den Signalwandler (36) umgibt.

3. Elektromagnetischer Eingabestift (50, 60) nach Anspruch 1, **dadurch gekennzeichnet, dass** der Kontroller (62) auf der Schaltplatine (34) installiert ist.

4. Elektromagnetischer Eingabestift (30) nach Anspruch 1, **dadurch gekennzeichnet dass** der elektromagnetische Eingabestift (30) weiter einen Oszillator (42) zum Amplifizieren des von der Synchronisierungsspule (40) erzeugten Frequenzsignals umfasst.

5. Elektromagnetischer Eingabestift (30) nach Anspruch 4 **dadurch gekennzeichnet, dass** der Oszillator (42) auf der Schaltplatine (34) installiert ist.

6. Elektromagnetischer Eingabestift (50, 60) nach Anspruch 1 **dadurch gekennzeichnet, dass** der Kontroller (52, 62) einen Verstärker (54, 64) umfasst, um das von dem Kontroller (62) oder der Synchronisierungsspule (40) erzeugte Frequenzsignal zu verstärken.

7. Elektromagnetischer Eingabestift (50, 60) nach Anspruch 1 **dadurch gekennzeichnet, dass** der Kontroller (52, 62) das von dem Kontroller (62) oder der Synchronisierungsspule (40) erzeugte Frequenzsignal verstärken kann.

8. Elektromagnetischer Eingabestift (30, 50, 60) nach Anspruch 1, **dadurch gekennzeichnet, dass** der elektromagnetische Eingabestift (30, 50, 60) weiter eine Batterie (44) umfasst, die in dem Gehäuse (32) installiert ist, um den elektromagnetischen Eingabestift (30, 50, 60) mit Strom zu versorgen.

## Revendications

1. Stylet électromagnétique (30, 50, 60) pour commander un panneau tactile capacitif (10) comprenant :
un boîtier (32) ;
**caractérisé par** :
un transducteur de signaux (36) pour accéder à un signal de fréquence du panneau tactile capacitif (10) ;
un bobinage d'émission-réception (38) encerclant le transducteur de signaux (36) pour recevoir et émettre des signaux sans fil ayant une fréquence similaire à une fréquence du panneau tactile capacitif (10);
un contrôleur (62) ou un bobinage de synchronisation (40) pour générer un signal de fréquence ayant une fréquence similaire à la fréquence du panneau tactile capacitif (10) selon les signaux sans fil reçus par le bobinage d'émission-réception (38) ; et
une carte de circuit imprimé (34) installée à l'intérieur du boîtier (32) et connectée au transducteur de signaux (36) pour traiter le signal de fréquence généré par le contrôleur (62) ou le bobinage de synchronisation (40).

2. Stylet électromagnétique (30, 50) selon la revendication 1, **caractérisé en ce que** le bobinage de synchronisation (40) encercle le transducteur de signaux (36).

3. Stylet électromagnétique (50, 60) selon la revendication 1, **caractérisé en ce que** le contrôleur (62) est installé sur la carte de circuit imprimé (34).

4. Stylet électromagnétique (30) selon la revendication 1, **caractérisé en ce que** le stylet électromagnétique (30) comprend en outre un oscillateur (42) destiné à amplifier le signal de fréquence généré par le bobinage de synchronisation (40).

5. Stylet électromagnétique (30) selon la revendication 4, **caractérisé en ce que** l'oscillateur (42) est installé sur la carte de circuit imprimé (34).

6. Stylet électromagnétique (50, 60) selon la revendication 1, **caractérisé en ce que** le contrôleur (52, 62) comprend un amplificateur (54, 64) pour amplifier le signal de fréquence généré par le contrôleur (62) ou le bobinage de synchronisation (40).

7. Stylet électromagnétique (50, 60) selon la revendication 1, **caractérisé en ce que** le contrôleur (52, 62) permet d'amplifier le signal de fréquence généré par le contrôleur (62) ou le bobinage de synchronisation (40).

8. Stylet électromagnétique (30, 50, 60) selon la revendication 1, **caractérisé en ce que** le stylet électromagnétique (30, 50, 60) comprend en outre une batterie (44) installée dans le boîtier (32) pour alimenter le stylet électromagnétique (30, 50, 60).
